Europäisches Patentamt

(19) European Patent Office

Office européen des brevets

(11) Numéro de publication: **0 239 454**
**B1**

(12) **FASCICULE DE BREVET EUROPEEN**

(45) Date de publication du fascicule du brevet: **01.08.90**

(21) Numéro de dépôt: **87400471.6**

(22) Date de dépôt: **04.03.87**

(51) Int. Cl.⁵: **B 64 G 1/44**

(54) **Mécanisme pour le déplacement d'un organe et son application aux générateurs solaires déployables.**

(30) Priorité: **07.03.86 FR 8603269**

(43) Date de publication de la demande:
**30.09.87 Bulletin 87/40**

(45) Mention de la délivrance du brevet:
**01.08.90 Bulletin 90/31**

(84) Etats contractants désignés:
**AT BE DE ES GB IT NL SE**

(56) Documents cités:
**DE-A-3 106 099**
**US-A-3 408 029**
**US-A-3 474 488**
**US-A-3 670 358**
**US-A-3 677 508**

(73) Titulaire: **AEROSPATIALE Société Nationale
Industrielle
37, Boulevard de Montmorency
F-75781 Paris Cédex 16 (FR)**

(72) Inventeur: **Viale, Daniel
La Colle de Miche - Tanneron
F-83440 Fayence (FR)**
Inventeur: **Lambert, Jean-François
Quartier des Mitres
F-06580 Pegomas (FR)**

(74) Mandataire: **Bonnetat, Christian et al
CABINET BONNETAT 23, Rue de Léningrad
F-75008 Paris (FR)**

Courier Press, Leamington Spa, England.

## Description

La présente invention concerne un mécanisme pour le déplacement d'un organe mobile, ainsi que l'application dudit mécanisme aux générateurs solaires déployables.

On connaît déjà, par exemple par le brevet DE-A-3 106 099, un mécanisme permettant de déplacer en translation, par rapport à un support, un organe mobile entre deux positions extrêmes. Ce mécanisme connu comporte des moyens élastiques moteurs disposés entre ledit organe et ledit support et des moyens de retenue assurant une liaison, susceptible d'être rompue, entre ledit organe et ledit support. Dans une première position extrême dudit organe mobile, lesdits moyens élastiques moteurs sont bandés, mais empêchés de se détendre grâce à l'action desdits moyens de retenue. En revanche, dès rupture de ladite liaison assurée par les moyens de retenue, lesdits moyens élastiques se détendent et déplacent ledit organe mobile vers sa seconde position extrême, dans laquelle les moyens élastiques sont alors au moins partiellement détendus.

Un tel mécanisme connu peut trouver de nombreuses applications; toutefois, il est particulièrement avantageux de l'utiliser à bord d'un satellite artificiel, pour le déploiement ou la rétraction automatique d'organes montés sur le corps dudit satellite.

Dans les modes de réalisation connus de ce mécanisme, lesdits moyens élastiques moteurs sont formés par un ressort hélicoïdal, comprimé dans ladite première position de l'organe mobile.

Il en résulte quelques inconvénients. En effet, en position comprimée, ledit ressort ne peut pas présenter une longueur inférieure à celle qu'il a lorsque ses spires sont jointives: par suite, l'encombrement dudit ressort est important et la position dudit organe par rapport audit support ne peut pas être optimale. De plus, la course d'un tel ressort entre sa position comprimée et sa position détendue est faible. Enfin, lorsque ledit ressort hélicoïdal se détend, il communique une trop forte accélération audit organe mobile, ce qui est source de détériorations dudit organe et/ou dudit support.

La présente invention a pour objet de remédier à ces inconvénients.

A cette fin, selon l'invention, le mécanisme pour tirer, par rapport à un support, un organe mobile tel qu'une tige, un tirant ou un câble, entre deux positions extrêmes, ce mécanisme comportant des moyens élastiques moteurs disposés entre ledit organe et ledit support et des moyens de retenue assurant une liaison susceptible d'être rompue, entre ledit organe et ledit support, de telle sorte que, dans une première desdites positions extrêmes dudit organe, lesdits moyens élastiques moteurs sont bandés, mais empêchés de se détendre grâce à l'action desdits moyens de retenue et que, dans la seconde desdites positions extrêmes dudit organe, lesdits moyens élastiques moteurs sont au moins partiellement détendus par suite de la rupture de ladite liaison assurée par lesdits moyens de retenue est caractérisé en ce que:

lesdits moyens élastiques moteurs sont constitués par une pluralité de lames élastiques souples agencées de façons identiques et régulièrement réparties autour dudit organe, les extrémités de chaque lame élastique souple étant respectivement reliées audit organe et audit support et étant proches l'une de l'autre dans chaque première position, de sorte que ladite lame élastique forme alors une boucle, et écartées l'une de l'autre dans ladite seconde position, d'une distance correspondant à la longueur dedites lames, l'une au moins desdites extrémités de chaque lame souple étant articulée sur ledit organe ou sur ledit support autour d'un axe orthogonal à la direction de traction; et

des moyens d'amortissement sont prévus entre, au moins, d'une part ledit support ou ledit organe, et d'autre part, les extrémités correspondantes desdites lames.

Ainsi, grâce à l'invention, on voit que, par suite de la réalisation desdits moyens élastiques sous la forme de lames élastiques souples, l'encombrement dudit mécanisme peut être faible dans ladite première position, la position relative de l'organe par rapport au support pouvant être optimisée sans contrainte d'encombrement minimal à respecter, parallèlement à la direction dudit déplacement. En revanche, l'amplitude du déplacement peut être grande, puisque déterminée uniquement par la longueur desdites lames élastiques. De plus, l'action de déploiement élastique d'une telle lame élastique souple, montée de la façon indiquée, est douce, de sorte qu'aucun risque de détérioration n'est à redouter, d'autant plus que lesdits moyens d'amortissement évitent des accélérations importantes.

On remarquera que le document US-A-3 408 029 décrit déjà des moyens élastiques comportant une bande souple, prévus pour déployer un élément mobile articulé à un élément fixe.

Cependant, dans la présente invention, puisque l'organe mobile à déplacer (à tirer) est du type tige, tirant ou câble, lesdits moyens élastiques moteurs sont adaptés à cette application et comportent une pluralité de lames élastiques souples réparties autour dudit organe.

On remarquera également que, dans ladite seconde position, lesdites lames élastiques occupent une position de repos allongée rectiligne, de sorte qu'un retour dudit organe de sa seconde vers sa première position ne pourrait être obtenu qu'en exerçant une importante force en bout sur lesdites lames; il en résulte que, dans cette seconde position, les lames élastiques détendues assurent pratiquement le verrouillage dudit organe dans cette position.

Dans un mode avantageux de réalisation, le mécanisme comporte deux montures respectivement liées audit support et audit organe et sur lesquelles sont fixées, en commun, les extrémités correspondantes desdites lames élastiques souples, la liaison entre au moins une desdites montures et les extrémités correspondantes desdites lames élastiques est réalisée au moyen d'articulations, dont les axes sont orthogonaux à ladite direction de déplacement et lesdits moyens d'amortissement sont disposés entre ledit support et la monture à laquelle sont reliées les extrémités desdites lames élastiques dirigées vers ledit support.

Les moyens d'amortissement peuvent être constitués par un jeu de deux bagues coaxiales susceptibles de coulisser l'une sur l'autre avec frottement, dont l'une est fixée sur ledit support et sur l'autre desquelles est fixée ladite monture desdites lames élastiques, l'axe commun desdites bagues étant parallèle à la direction dudit déplacement. Ladite bague fixée sur ladite monture et susceptible de coulisser sur l'autre bague est avantageusement élastiquement expansible.

De préférence, pour accroître l'intensité de l'amortissement au fur et à mesure du déplacement dudit organe vers ladite seconde position, il est avantageux de prévoir, pour les parties desdites bagues en contact, une variation de diamètre susceptible de procurer un effet de coin. On remarquera que, de plus, on renforce le verrouillage dudit organe dans ladite seconde position. A cet effet, il est encore avantageux de prévoir sur lesdites bagues d'amortissement, des moyens de verrouillage par accrochage, susceptibles de coopérer entre eux lorsque lesdites bagues sont dans leur position relative correspondant à ladite seconde position. De tels moyens de verrouillage peuvent être prévus sur des rebords d'extrémité desdites bagues.

Dans un mode de réalisation avantageux, chaque lame élastique est formée par au moins un ruban mince élastique souple à section incurvée, du type de ceux utilisés pour la réalisation des mètres à ruban. Dans certains cas, pour augmenter la force élastique desdites lames élastiques, on peut constituer chacune de celles-ci en associant deux tels rubans, de façon que leurs concavités soient en regard.

Quoique non exclusivement, le mécanisme selon l'invention est particulièrement approprié à être utilisé dans un système de retenue pour ensemble de panneaux solaires, du type décrit dans le brevet DE-A-3 106 099 et destiné à un satellite artificiel.

Ainsi, selon un autre aspect de la présente invention, un système de retenue, en position repliée, d'un ensemble de panneaux articulés entre eux, ainsi que sur une structure, et pouvant prendre, soit ladite position repliée dans laquelle lesdits panneaux forment un empilement, soit une position déployée dans laquelle lesdits panneaux sont au moins sensiblement alignés les uns au bout des autres, ledit système comportant:

au moins un organe de retenue traversant lesdits panneaux en position repliée dudit ensemble et fixé, d'un côté, sur ladite structure et, de l'autre côté, sur le panneau extérieur dudit ensemble;

des moyens pour rompre volontairement soit ledit organe de retenue, soit sa fixation sur ladite structure, lorsque l'on désire faire passer ledit ensemble de panneaux de sa position repliée à sa position déployée; et

un mécanisme à moyens élastiques moteurs pour tirer, à travers ledit panneau extérieur, la partie correspondante dudit organe de retenue après action desdits moyens de rupture, est caractérisé en ce que ledit mécanisme comporte une pluralité de lames élastiques souples agencées de façons identiques et régulièrement réparties autour dudit organe, les extrémités de chaque lame élastique souple étant respectivement reliées audit organe de retenue et audit panneau extérieur et étant proches l'une de l'autre dans ladite position repliée, de sorte que chaque lame élastique forme alors une boucle, et étant, dans la position déployée, écartées l'une de l'autre d'une distance correspondant à la longueur desdites lames, l'une au moins desdites extrémités de chaque lame souple étant articulée sur ledit organe ou ledit support autour d'un axe orthogonal à la direction de la traction et en ce que des moyens d'amortissement sont prévus entre, au moins, d'une part, ladite structure, et, d'autre part, les extrémités correspondantes desdites lames.

Bien entendu, ce système de retenue peut également être remarquable en ce que son mécanisme comporte les autres particularités du mécanisme selon l'invention mentionnées ci-dessus.

Les figures du dessin annexé feront bien comprendre comment l'invention peut être réalisée. Sur ces figures, les références identiques désignent des éléments semblables.

La figure 1 illustre schématiquement, en position repliée, un ensemble de panneaux solaires monté sur un satellite, pourvu du système de retenue conforme à la présente invention.

La figure 2 montre schématiquement, en position déployée, l'ensemble de panneaux solaires de la figure 1.

La figure 3 représente, en position repliée des panneaux, un exemple de réalisation conformément à l'invention, du système de retenue dudit ensemble de panneaux solaires.

La figure 4 montre le système de la figure 3 après déploiement dudit ensemble de panneaux solaires.

La figure 5 est une vue en coupe selon les lignes V—V des figures 3 et 4, montrant la section des lames élastiques.

La figure 6 montre, en coupe schématique, une variante de réalisation desdites lames élastiques.

La figure 7 montre, en perspective agrandie et partiellement écorchée, une des bagues du système amortisseur de déploiement.

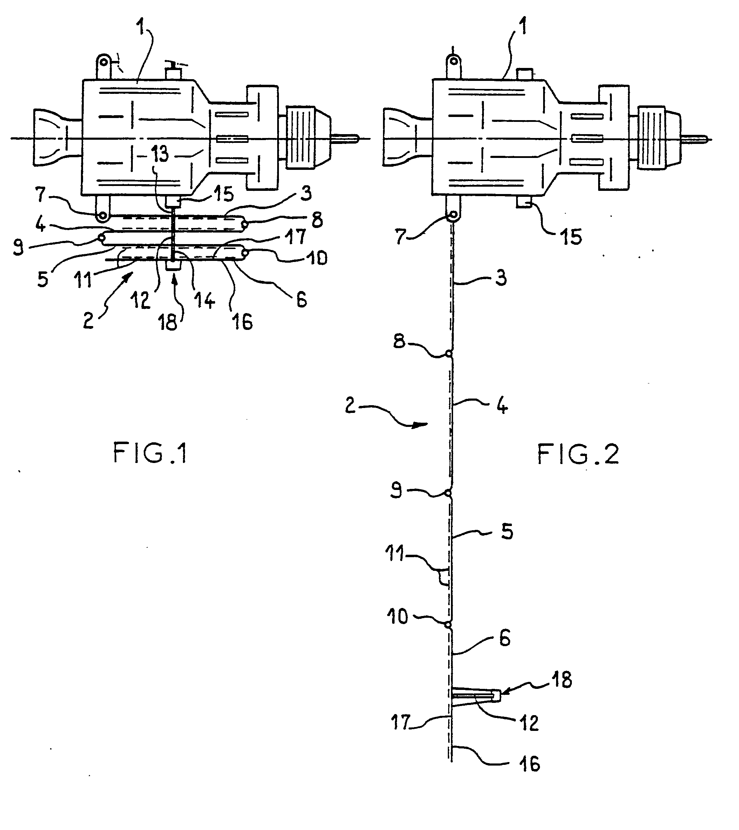

Le satellite artificiel 1 représenté sur la figure 1 est équipé d'au moins un ensemble 2 de panneaux solaires 3, 4, 5 et 6 occupant une position repliée en zig-zag par rapport à la structure du satellite 1 et verrouillés dans cette position au moyen d'un système de retenue.

Le panneau interne 3 est lié en rotation, par l'un de ses bords latéraux, à la structure du satellite 1 par une articulation 7, tandis que le bord latéral, opposé au précédent, dudit panneau 3 est lié, par une articulation 8, au panneau adjacent 4. Ce dernier est lié également par une articulation 9, au panneau 5, qui, à son tour, est lié au panneau externe 6 de l'ensemble par une articulation 10.

Les panneaux 3 à 6 forment ainsi, dans la position repliée, un empilement. Chaque panneau comporte sur une de ses faces, des cellules solaires 11, de façon qu'en position déployée dudit ensemble de panneaux (figure 2), les cellules solaires 11 soient tournées du même côté et orientées vers le soleil.

Le nombre et la forme des panneaux, ainsi que la liaison du premier panneau avec la structure du satellite pourraient être différents; il en est de même du nombre d'ensembles 2 de panneaux solaires agencés sur le satellite.

Le système de retenue de l'ensemble 2 des panneaux solaires 3 à 6, en position repliée, comporte au moins un organe de retenue 12, traversant lesdits panneaux et relié d'un côté, à son extrémité 13, à des moyens de rupture volontaire 15 fixés à la structure du satellite et, de l'autre côté, à son autre extrémité 14, à la face extérieure 16 du panneau solaire externe 6. Sur ce dernier panneau, les cellules solaires 11 sont agencées sur la face intérieure 17 de ce panneau, en regard du panneau 5. Les moyens de rupture volontaire 15 sont, par exemple, du type pyrotechnique et sont aptes, lorsqu'ils sont actionnés, à désolidariser l'organe de retenue 12 du satellite 1, autorisant ainsi le passage de l'ensemble 2 des panneaux solaires, de la position repliée (figure 1) à la position déployée (figure 2), par exemple spontanément sous l'action de ressorts incorporés aux articulations 7 à 10 et non spécifiquement représentés.

Pour éviter qu'en position déployée, l'organe de retenue 12 détériore les cellules 11 de la face 17 et porte une ombre sur celles-ci, le système de retenue comporte, de plus, un mécanisme 18 à moyens élastiques moteurs pour tirer, à travers le panneau solaire externe 6, l'organe de retenue 12 après action des moyens de rupture pyrotechnique 15, le mécanisme 18 étant lié à l'extrémité 14 de l'organe de retenue 12.

Comme on peut le voir sur la figure 2, dans la position déployée de l'ensemble 2, les panneaux solaires 3 à 6 sont sensiblement alignés les uns au bout des autres, après l'actionnement des moyens de rupture pyrotechnique 15, lesquels désolidarisent l'organe de retenue 12 de la structure du satellite 1.

Dès ce moment là, le mécanisme 18 à moyens élastiques moteurs, préalablement bandé en position repliée de l'ensemble 2 des panneaux solaires, libère son energie et se détend pour reprendre son état détendu en tirant l'organe de retenue 12 par l'extrémité 14 vers l'extérieur du panneau externe 6, dans une position éloignée par rapport au satellite. A partir de la rupture de la liaison entre l'organe 12 et le satellite 1, les panneaux solaires 3, 4, 5 et 6 peuvent se déployer autour de leurs articulations respectives, par exemple sous l'action des moyens élastiques incorporés auxdites articulations, pour se disposer sensiblement les uns au bout des autres. Lorsque le mécanisme 18 atteint son état détendu, il immobilise l'organe de retenue 12 en regard de la face extérieure 16 du panneau solaire externe 6.

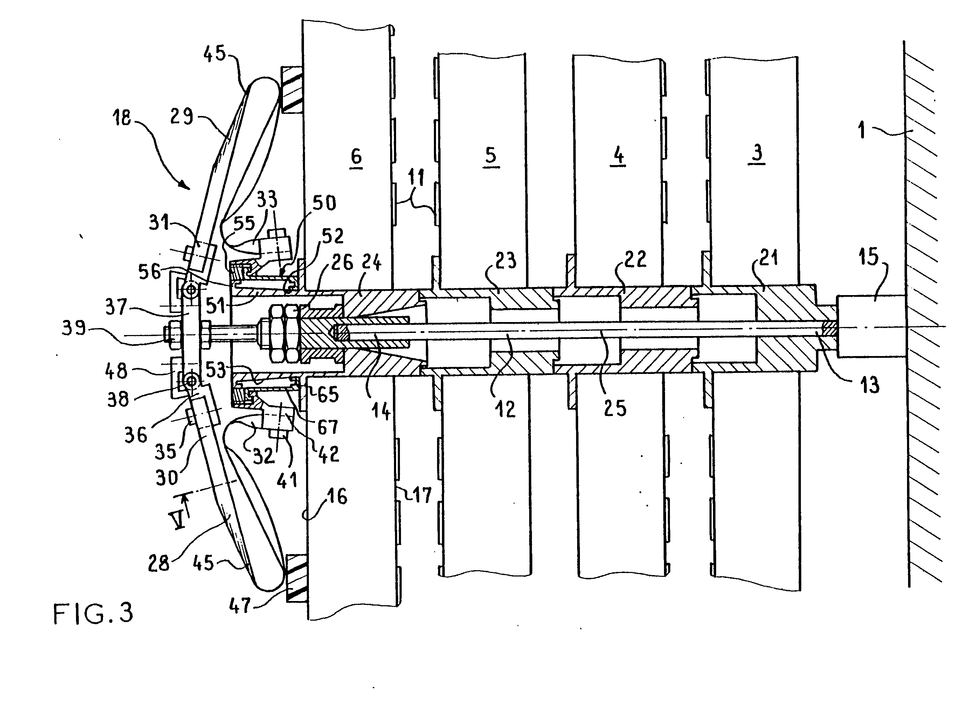

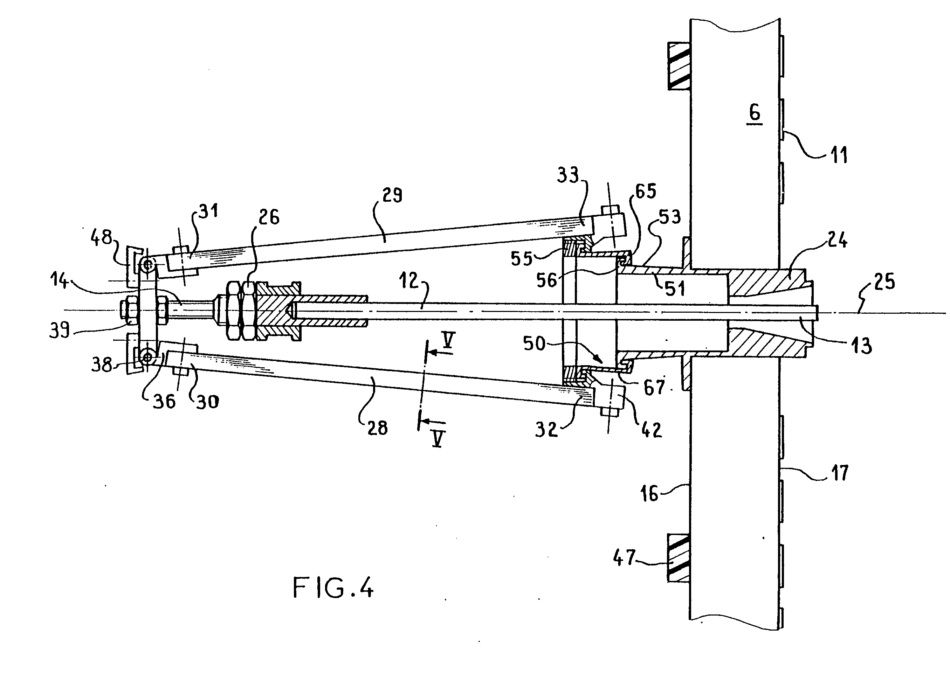

Un exemple de réalisation du système de retenue de l'ensemble des panneaux solaires est représenté sur les figures 3 et 4. Ces figures correspondent respectivement à une position repliée des panneaux, ceux-ci étant par exemple parallèles à l'axe longitudinal du satellite 1, et à une position déployée des panneaux, ceux-ci étant alors par exemple orthogonaux à l'axe longitudinal du satellite.

Le système de retenue comporte ainsi l'organe de retenue 12, les moyens de rupture pyrotechnique 15 et le mécanisme à moyens élastiques 18. Dans cet exemple de réalisation, on retrouve l'organe de retenue 12, tel que par exemple, une tige, un tirant ou un câble, dont l'extrémité interne 13 est reliée aux moyens de rupture pyrotechniques 15 (schématiquement représentés par un rectangle et solidaires de la structure du satellite 1) et dont l'extrémité externe 14 porte le mécanisme 18.

Des manchons 21, 22, 23 et 24, dont chacun d'eux est solidaire d'un panneau 3 à 6, forment par juxtaposition, en position repliée desdits panneaux, un passage continu pour ledit organe de retenue 12 à travers ceux-ci, ainsi qu'un système de butée fixant l'écartement des panneaux de l'empilement ainsi constitué. L'axe 25 de l'organe de retenue 12 est au moins approximativement coaxial aux manchons 21 à 24, dont certains sont aptes à former un guide de coulissement pour l'organe 12 lorsque celui-ci est tiré par le mécanisme 18. A l'extrémité 14 de l'organe 12, on prévoit un agencement d'écrous de serrage 26 permettant de presser les manchons 21 à 24 les uns au bout des autres, en position repliée desdits panneaux 3 à 6. On voit ainsi que, de plus, la coopération de l'organe de retenue 12, des manchons 21 à 24 et des écrous de serrage 26 permet de maintenir rigidement, en position repliée des panneaux 3 à 6, non seulement ceux-ci entre eux, mais encore par rapport au satellite 1.

Conformément à l'invention, le mécanisme 18 est constitué dans cet exemple de réalisation, de deux lames élastiques souples 28 et 29, dont une extrémité respective 30, 31 est reliée à l'extrémité externe 14 de l'organe de retenue 12, et dont l'autre extrémité respective 32, 33 est reliée au manchon 24 porté par le panneau solaire externe 6.

Plus précisément, les extrémités externes 30 et 31 des lames élastiques 28, 29 sont fixées au moyen, par exemple, de vis 35 à des doigts 36 montés pivotants sur une monture 37, autour d'axes 38 orthogonaux à l'axe 25 de l'organe de retenue 12. La monture 37 est fixée à l'extrémité externe 14 de l'organe 12 par des moyens de fixation appropriés, tels que des écrous 39. De même, les extrémités internes 32 et 33 des lames élastiques 28, 29 sont fixées au moyen, par'

exemple, de vis 41 sur une monture 42, reliée au manchon 24 porté par le panneau 6.

Les lames élastiques souples 28 et 29 sont, dans la configuration illustrée sur la figure 3, bandées et les extrémités 30 et 32 de la lame 28 et les extrémités 31 et 33 de la lame 29 sont proches les unes des autres. Les lames 28 et 29 forment alors, chacune, une boucle 45 lorsque le système de retenue maintient l'ensemble des panneaux solaires en position repliée.

Pour éviter que les boucles 45 formées par les lames, viennent au contact de la face externe 16 du panneau 6 de l'ensemble 2, des cales 47, par exemple en un polymère, sont collées sur cette face. Les doigts 36, sur lesquels sont fixées les extrémités 30, 31 des lames élastiques 28, 29, s'appuient dans cette position extrême repliée contre des butées de positionnement 48 solidaires de la monture 37, en maintenant ainsi les lames dans leur position bandée.

Le mécanisme 18 pourrait comporter un nombre différent de lames suivant les efforts à exercer. Il est bien entendu préférable que les lames soient régulièrement réparties autour de l'axe 25 de l'organe mobile 12.

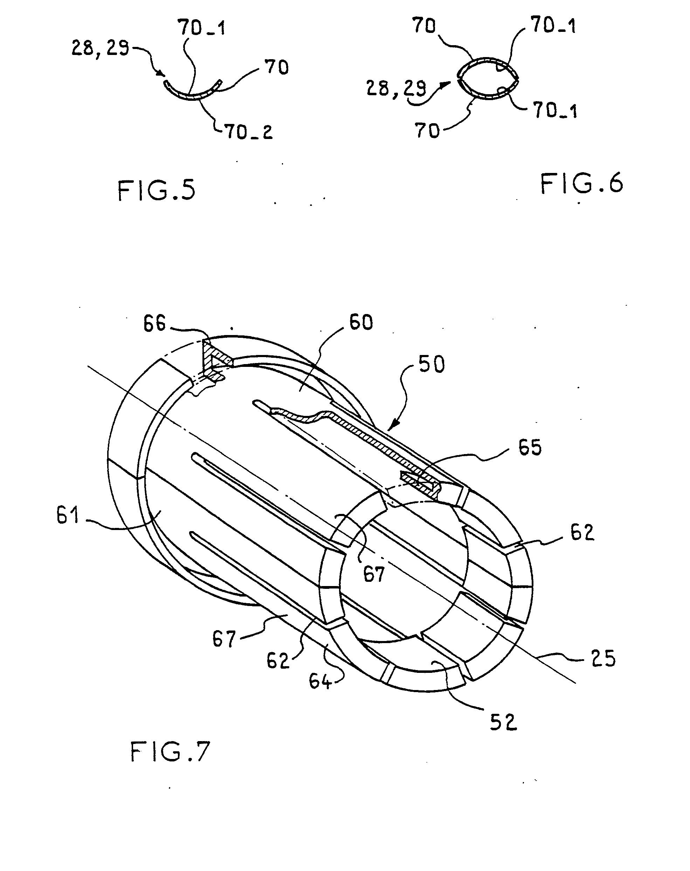

La figure 5 illustre, en coupe, un mode de réalisation préféré pour les lames élastiques 28 et 29. Dans ce cas, chacune desdites lames 28 et 29 est formée par un ruban mince élastique et souple 70 à section incurvée, présentant une face concave 70.1 et une face convexe 70.2, du type de ruban dont on fait les mètres souples. Dans ce cas, il est avantageux que la face concave 70.1 soit tournée vers l'organe de retenue 12.

La figure 6 illustre également en coupe, une variante de réalisation des lames élastiques 28 et 29, formée de deux rubans élastiques 70 associés, de façon que leurs faces concaves respectives 70.1 soient en regard l'une de l'autre. Dans cette variante, on obtient des lames 28 et 29 susceptibles de fournir des forces élastiques plus importantes.

Dans l'exemple de réalisation illustré par les figures 3 et 4, il est prévu des moyens d'amortissement permettant de freiner, notamment en fin de course, le déplacement de l'organe de retenue 12, entraîné par les lames élastiques 28, 29, lorsque celui-ci est désolidarisé du satellite 1, grâce à l'action des moyens de rupture 15. Ces moyens d'amortissement sont disposés entre la monture 42, à laquelle sont reliées les extrémités 32, 33 des lames élastiques 28, 29, et le manchon 24, associé au panneau 6.

Ces moyens d'amortissement sont constitués par un jeu de deux bagues 50 et 51, coaxiales à l'axe 25, et susceptibles de coulisser l'une sur l'autre avec frottement par des parties coopérantes, respectivement 52 et 53. La bague 50 est fixée par un écrou 55 sur la monture 42 et la bague 51 est formée par un prolongement du manchon 24, en saillie par rapport à la face extérieure 16 du panneau solaire 6. La bague 50 est en contact par sa partie d'extrémité interne 52 avec la surface de la partie 53 de la bague 51.

De préférence, la surface 53 est conique de façon que son diamètre croisse en direction opposée au panneau 6 et elle se termine, à son extrémité externe, par un rebord extérieur recourbé 56.

Un exemple particulier de réalisation de la bague 50 est illustré sur la figure 7, en perspective. On peut y voir que la bague 50 est constituée, par exemple, de deux demi-coquilles 60 et 61 dans lesquelles sont pratiquées des fentes 62, au moins sensiblement parallèles à l'axe 25 de l'organe 12 lorsque ladite bague 50 est montée autour de la bague 51. Les fentes 62 débouchent dans l'extrémité 64 des deux demi-coquilles 60 et 61, située en regard de la face extérieure 16 du panneau solaire externe 6. L'extrémité 64 de la bague 50, définie par les deux demi-coquilles, est par ailleurs terminée par un rebord intérieur recourbé 65. En opposition, l'extrémité 66 de la bague 50 est recourbée vers l'extérieur et est pressée par l'écrou 55 contre la monture 42.

Ainsi, la partie 52, située à l'extrémité commune 64 des deux demi-coquilles 60, 61, est constituée d'une pluralité de lamelles 67 séparées par les fentes 62. Les lamelles 67 sont susceptibles de se déformer élastiquement, lors du déplacement de l'organe de retenue 12, tiré par les lames élastiques 28, 29, le long de la partie conique 53 avec frottement procurant alors un effet de coin, ce qui freine ainsi l'organe de retenue 12. De plus, des moyens de verrouillage par accrochage sont constitués par les rebords 56 et 65, respectivement des bagues 51 et 50, ces rebords de forme complémentaire, s'emboîtant l'un dans l'autre dans une position relative correspondant à la position extrême de l'organe 12, lorsque les panneaux solaires sont déployés.

La figure 4 illustre le système de retenue dans la position déployée de l'ensemble des panneaux solaires et seule une partie du panneau extrême 6 est visible sur cette figure. Cette position déployée est bien entendu fixée par la longueur des lames 28 et 29 qui sont alors rectilignes.

Comme il a été mentionné précédemment en regard des figures 1 et 3, les panneaux solaires 3 à 6 sont maintenus verrouillés, dans la position repliée les uns sur les autres, par l'intermédiaire du système de retenue comportant l'organe de retenue 12, les moyens de rupture 15 et le mécanisme à moyens élastiques souples 18. Une fois le satellite 1 sur l'orbite désirée, il est donc nécessaire de déployer les ensembles de panneaux solaires, afin que ceux-ci, grâce aux cellules solaires 11 les équipant, puissent alimenter, par transformation de l'énergie solaire ou énergie électrique, les diverses servitudes du satellite.

A cet effet, les moyens de rupture pyrotechnique 15 sont actionnés et déclenchent l'explosion d'une charge pyrotechnique, cisaillant l'organe de retenue 12 à son extrémité interne 13. Ce dernier organe se trouve donc désolidarisé de la structure du satellite 1 et entraîné, suivant un déplacement guidé par les manchons 21 à 24, en translation parallèlement à son axe 25, par le mécanisme à moyens élastiques 18 de l'invention. En effet, dans la position repliée des panneaux 3 à 6, les lames élastiques 28 et 29, constituant le mécanisme, sont bandées et emmagasinent alors de l'énergie. Ainsi, lorsque l'organe 12 est désolidarisé, l'énergie des lames élastiques 28 et 29 est libérée, ce qui provoque la sortie progressive de l'organe de retenue 12 hors des panneaux 3 à 6, avec guidage par au moins certains des manchons 21 à 24 et absorption d'une partie de l'énergie produite par les lames. Les extrémités 30 et 31 des lames 28 et 29 tirent l'organe 12 avec lequel elles sont liées par la monture 37, au moyen des doigts 36. Durant la traction de l'organe 12, les divers panneaux solaires 3 à 6 se déploient autour de leurs articulations respectives, de façon à s'aligner les uns par rapport aux autres.

Le déplacement en translation de l'organe 12 suivant l'axe 25 continue jusqu'à ce que les lames élastiques souples 28 et 29 prennent leur état rectiligne détendu. Avant d'atteindre la position extrême dans laquelle les extrémités respectives des lames sont alors les plus éloignées les unes des autres, l'organe de retenue 12 est freiné en fin de course par les moyens d'amortissement 50, 51. La bague 50 joue alors pleinement son rôle, les lamelles 67 s'écartant progressivement en suivant, par l'intermédiaire de la partie 52, la partie conique 53, divergente de la bague 51 fixe par rapport au panneau solaire 6. Le frottement, ainsi créé, freine en douceur le déplacement de l'organe 12, jusqu'au moment où les lames élastiques 28 et 29 sont détendues et sensiblement 66 rectilignes. Les moyens de verrouillage 56, 65 entrent ensuite en action, de façon que le rebord 69 de la bague 50 vienne s'accrocher derrière le rebord 56 de la bague 51. L'organe de retenue 12 est ainsi verrouillé en position de traction extrême de sorte qu'il ne risque plus d'endommager des cellules solaires 11 ou de porter une ombre sur celles-ci.

Les avantages apportés par le système de retenue comportant le mécanisme à moyens élastiques apparaissent nettement. L'encombrement du mécanisme à lames souples est minimale dans la position repliée des panneaux solaires. La longueur de course des lames élastiques est adaptable en fonction de la longueur de l'organe 12, sans pour autant augmenter l'encombrement en position repliée. La force élastique des lames est progressive et douce. De plus, les moyens d'amortissement permettent d'optimiser le freinage en fin de course de l'organe, éliminant ainsi. les risques de détérioration des panneaux solaires.

## Revendications

1. Mécanisme pour tirer, par rapport à un support (1, 6), un organe de retenue mobile (12) tel qu'une tige, un tirant ou un câble, entre deux positions extrêmes, ce mécanisme comportant des moyens élastiques moteurs (18) disposés entre ledit organe (12) et ledit support (6) et des moyens de retenue (15) assurant une liaison susceptible d'être rompue, entre ledit organe et ledit support, de telle sorte que, dans une première desdites positions extrêmes dudit organe (12), lesdits moyens élastiques moteurs (18) sont bandés, mais empêchés de se détendre grâce à l'action desdits moyens de retenue (15) et que, dans la seconde desdites positions extrêmes dudit organe (12), lesdits moyens élastiques moteurs (18) sont au moins partiellement détendus par suite de la rupture de ladite liaison assurée par lesdits moyens de retenue (15), caractérisé en ce que:

lesdits moyens élastiques moteurs sont constitués par une pluralité de lames élastiques souples (28, 29) agencées de façons identiques et régulièrement réparties autour dudit organe (12), les extrémités (30, 32) de chaque lame élastique souple (28) étant respectivement reliées audit organe (12) et audit support (1, 6) et étant proches l'une de l'autre dans chaque première position, de sorte que ladite lame élastique forme alors une boucle (45), et écartées l'une de l'autre dans ladite seconde position, d'une distance correspondant à la longueur desdites lames, l'une au moins desdites extrémités (30, 32) de chaque lame souple (28) étant articulée sur ledit organe (12) ou sur ledit support (1, 6) autour d'un axe (38) orthogonal à la direction (25) de traction; et

des moyens d'amortissement (50, 51) sont prévus entre, au moins, d'une part, ledit support ou ledit organe, et d'autre part, les extremités correspordantes desdites lames.

2. Mécanisme selon la revendication 1, carractérisé en ce qu'il comporte deux montures (37, 42) respectivementt liées audit support et audit organe et sur lesquelles sont fixées, en commun, les extrémités correspondantes desdites lames (28, 29) élastiques souples et en ce que la liaison entre au moins une desdites montures (37) et les extrémités correspondantes (30, 31) desdites lames élastiques (28, 29) est réalisée au moyen d'articulations (36), dont les axes (38) sont orthogonaux à ladite direction de déplacement (25) et en ce que lesdits moyens d'amortissement sont disposés entre ledit support et la monture à laquelle sont reliées les extrémités desdites lames élastiques dirigées vers ledit support.

3. Mécanisme selon l'une des revendications 1 ou 2, caractérisé en ce que lesdits moyens d'amortissement sont constitués par un jeu de deux bagues (50 et 51) coaxiales susceptibles de coulisser l'une sur l'autre avec frottement, dont l'une (51) est fixée sur ledit support et sur l'autre (50) desquelles est fixée ladite monture (42) desdites lames élastiques (28, 29), l'axe commun desdites bagues étant parallèle à la direction dudit déplacement.

4. Mécanisme selon la revendication 3, caractérisé en ce que les parties desdites bagues (50, 51) en contact présentent une variation de diamètre susceptible deprocurer un effet de coin au fur et à mesure du déplacement dudit organe vers ladite seconde position.

5. Mécanisme selon l'une des revendications 3 ou 4, caractérisé en ce que ladite bague (50) fixée sur ladite monture (42) et susceptible de coulisser sur l'autre bague (51) est élastiquement expansible.

6. Mécanisme selon l'une des revendications 3 à 5, caractérisé en ce que des moyens de verrouillage par accrochage sont prévus sur lesdites bagues d'amortissement (50, 51) et sont susceptibles de coopérer entre eux lorsque lesdites bagues sont dans leur position relative correspondant à ladite seconde position dudit organe mobile par rapport audit support.

7. Mécanisme selon la revendication 6, caractérisé en ce que lesdits moyens de verrouillage par. accrochage sont constitués par des rebords d'extrémités (56, 65) desdites bagues (51, 50) s'emboîtant l'un dans l'autre, dans leur position relative correspondant à ladite seconde position.

8. Mécanisme selon l'une quelconque des revendications 1 à 7, caractérisé en ce que lesdites lames élastiques (28, 29) sont formées par au moins un ruban (70) mince élastique souple à section incurvée.

9. Mécanisme selon l'une des revendications 1 à 8, caractérisé en ce que lesdites lames élastiques (28, 29) sont formées par deux rubans (70) minces élastiques souples associés de façon que leurs concavités soient en regard.

10. Système de retenue, en position repliée, d'un ensemble de panneaux (3 à 6) articulés entre eux, ainsi que sur une structure (1), et pouvant prendre, soit ladite position repliée dans laquelle lesdits panneaux forment un empilement, soit une position déployée dans laquelle lesdits panneaux sont au moins sensiblement alignés les uns au bout des autres, ledit système comportant:

au moins un organe de retenue (12) traversant lesdits panneaux (3 à 6) en position repliée dudit ensemble et fixé, d'un côté sur ladite structure (1) et, de l'autre côté, sur le panneau extérieur (6) dudit ensemble;

des moyens (15) pour rompre volontairement soit ledit organe de retenue (12), soit sa fixation sur ladite structure (1), lorsque l'on désire faire passer ledit ensemble de panneaux de sa position repliée à sa position déployée; et

un mécanisme à moyens élastiques moteurs (18) pour tirer, à travers ledit panneau extérieur, la partie correspondante dudit organe de retenue (12) après action desdits moyens de rupture (15), caractérisé en ce que ledit mécanisme (18) comporte une pluralité de lames élastiques souples (28) agencées de façons identiques et régulièrement réparties autour dudit organe (12), les extrémités (30, 32) de chaque lame élastique souple étant respectivement reliées audit organe de retenue (12) et audit panneau extérieur (6) et étant proches l'une de l'autre dans ladite position repliée, de sorte que chaque lame élastique forme alors une boucle (45), et étant, dans la position déployée, écartées l'une de l'autre d'une distance correspondant à la longueur desdites lames, l'une au moins desdites extrémités (30, 32) de chaque lame souple (28) étant articulée sur ledit organe (12) ou ledit support (1, 6) autour d'un axe (38) orthogonal à la direction (25) de la traction et en ce que des moyens d'amortissement (50, 51) sont prévus entre, au moins, d'une part, ladite structure (1), et, d'autre part, les extrémités correspondantes desdites lames.

11. Système de retenue selon la revendication 10, caractérisé en ce que le mécanisme comporte les particularités spécifiées sous l'une quelconque des revendications 2 à 9.

**Patentansprüche**

1. Mechanismus zum Ziehen eines in Bezug auf einen Träger (1, 6) beweglichen Halterungselements (12), z.B. eines Schafts, einer Zugstange oder eines Seils zwischen zwei Extrempositionen, wobei dieser Mechanismus bewegende elastische Mittel (18), welche zwischen besagtem Element (12) und besagtem Träger (6) angeordnet sind, und Befestigungsmittel (15) aufweist, welche eine zum Lösen geeignete Verbindung zwischen besagtem Element und besagtem Träger auf die Art gewährleisten, daß in einer ersten besagter Extrempositionen besagten Elementes (12) besagte bewegende elastische Mittel (18) gespannt, aber dank der Wirkung der genannten Befestigungsmittel (15) am Lose-Werden gehindert sind und daß in der zweiten besagter Extrempositionen besagten Elementes (12) besagte bewegende elastische Mittel (18) zufolge des Lösens besagter durch besagte Befestigungsmittel (15) gewährleisteter Verbindung zumindest teilweise losgelassen sind, dadurch gekennzeichnet, daß besagte bewegende elastische Mittel durch eine Vielzahl von biegsamen elastischen Blättern (28, 29) gebildet sind, welche auf idente Art angeordnet und um besagtes Element (12) regelmäßig verteilt sind, wobei die Enden (30, 32) eines jeden biegsamen elastischen Blattes (28) jeweils mit besagtem Element (12) und besagtem Träger (1, 6) verbunden sind und sich in jeder ersten Position nahe zueinander befinden, derartig, daß besagtes elastisches Blatt dabei eine Schleife (45) bildet, und sich in besagter zweiter Position voneinander in einem Abstand entfernt befinden, welcher der Länge besagter Blätter entspricht, wobei zumindest das eine besagter Enden (30, 32) eines jeden biegsamen Blattes (28) an besagtem Element (12) oder an besagtem Träger (1, 6) um eine zur Richtung (25) des Ziehens orthogonale Achse (38) schwenkbar gelagert ist; und daß Dämpfungsmittel (50, 51) zwischen, zumindest, einerseits besagtem Träger oder besagtem Element und andererseits den korrespondierenden Enden besagter Blätter vorgesehen sind.

2. Mechanismus nach Anspruch 1, dadurch gekennzeichnet, daß er zwei Montagevorrichtungen (37, 42) aufweist, welche jeweils mit besagtem Träger und besagtem Element verbunden sind und an welchen, gemeinsam, die korrespondierenden Enden besagter biegsamer elastischer Blätter (28, 29) fixiert sind, und daß die Verbindung zwischen mindestens einer der besagten Montagevorrichtungen (37) und den korrespondierenden Enden (30, 31) besagter elastischer Blätter (28,29) mittels Gelenksverbindungen (36) hergestellt ist, deren Achsen (38) orthogonal zur besagten Verlagerungsrichtung (25) ausgerichtet sind, und daß besagte Dämpfungsmittel zwischen besagtem Träger und der Montagevorrichtung, mit welcher die gegen besagten Träger gerichteten Enden besagter elastischer Blätter verbunden sind, angeordnet sind.

3. Mechanismus nach einem der Ansprüche 1 oder 2, dadurch gekennzeichnet, daß besagte Dämpfungsmittel durch einen Satz von zwei koaxial angeordneten Ringen (50 und 51) gebildet sind, welche geeignet sind, um mit Reibung aneinander zu gleiten, von denen der eine (51) an besagtem Träger fixiert ist und am anderen (50) derselben besagte Montagevorrichtung (42) besagter elastischer Blätter (28, 29) fixiert ist, wobei die gemeinsame Achse besagter Ringe parallel zur Richtung besagter Verlagerung angeordnet ist.

4. Mechanismus nach Anspruch 3, dadurch gekennzeichnet, daß die Partien besagter im Kontakt befindlicher Ringe (50, 51) eine Durchmesservariation aufweisen, welche geeignet ist, um nach und nach einen Keileffekt für die Verlagerung besagten Elementes in besagte zweite Position zu ergeben.

5. Mechanismus nach einem der Ansprüche 3 oder 4, dadurch gekennzeichnet, daß besagter Ring (50), welcher an besagter Montagevorrichtung (42) fixiert ist und am anderen Ring gleiten kann, elastisch dehnbar ist.

6. Mechanismus nach einem der Ansprüche 3 bis 5, dadurch gekennzeichnet, daß an besagten Dämpfungsringen (50, 51) Verriegelungseinrichtungen durch Einhaken vorgesehen sind und miteinander kooperieren können, wenn sich besagte Ringe in ihrer Winkellage korrespondierend zur besagten zweiten Position des besagten in Bezug auf besagten Träger beweglichen Elementes befinden.

7. Mechanismus nach Anspruch 6, dadurch gekennzeichnet, daß besagte Verriegelungseinrichtungen durch Einhaken durch Endbördelungen (56, 65) besagter Ringe (51, 50) gebildet sind, wobei sie sich in ihrer der besagten zweiten Position entsprechenden Winkellage ineinanderschachteln.

8. Mechanismus nach einem der Ansprüche 1 bis 7, dadurch gekennzeichnet, daß besagte elastische Blätter (28, 29) durch mindestens ein biegsames elastisches schmales Band (70) mit bogenförmigem Querschnitt gebildet sind.

9. Mechanismus nach einem der Ansprüche 1 bis 8, dadurch gekennzeichnet, daß besagte elastische Blätter (28, 29) durch zwei biegsame elastische schmale Bänder (70) gebildet sind, welche so miteinander verbunden sind, daß sich ihre Konkavseiten gegenüberliegend befinden.

10. Halterungssystem, bei zusammengeklappter Position, einer Baugruppe aus Panelen (3 bis 6), welche sowohl aneinander als auch an einer Struktur (1) gelenkig gelagert sind und welche entweder besagte zusammengeklappte Position, in welcher besagte Panele einen Stapel bilden, oder eine entfaltete Position, in welcher besagte Panele mindestens annähernd in einer Linie Stirn an Stirn aneinandergereiht sind, einnehmen können, wobei besagtes System aufweist:

mindestens ein Halterungselement (12), welches bei zusammengeklappter Position besagter Baugruppe besagte Panele (3 bis 6) durchsetzt und an einer Seite an der genannten Struktur (1) und an der anderen Seite am äußeren Panel (6) besagter Baugruppe fixiert ist,

Mittel (15), um willkürlich entweder besagtes Halterungselement (12) oder dessen Fixierung an besagter Struktur (1) zu lösen, wenn man besagte Baugruppe von Panelen aus ihrer zusammengeklappten Position in ihre entfaltete Position bringen möchte; und

einen Mechanismus mit bewegenden elastischen Mitteln (18), um die entsprechende Partie besagten Halterungselements (12) nach Betätigung besagter Bruchmittel (15) durch besagtes äußeres panel hindurchzuziehen,

dadurch gekennzeichnet, daß besagter Mechanismus (18) eine Vielzahl von biegsamen elastischen Blättern (28, 29) aufweist, welche auf idente Art angeordnet und um besagtes Element (12) gleichmäßig verteilt sind, wobei die Enden (30, 32) eines jeden biegsamen elastischen Blattes jeweils mit besagtem Halterungselement (12) und besagtem äußeren Panel (6) verbunden sind und sich in besagter zusammengeklappter Position nahe zueinander befinden, derartig, daß jedes elastische Blatt dabei eine Schleife (45) bildet, und sich, in der entfalteten Position, voneinander in einem Abstand entfernt befinden, welcher der Länge besagter Blätter entspricht, wobei zumindest das eine besagter Enden (30, 32) eines jeden biegsamen Blattes (28) an besagtem Element (12) oder an besagtem Träger (1, 6) um eine zur Richtung (25) des Ziehens orthogonale Achse (38) schwenkbar gelagert ist und daß Dämpfungsmittel (50, 51) zwischen, zumindest, einerseits der genannten Struktur (1) und andererseits den korrespondierenden Enden besagter Blätter vorgesehen sind.

11. Halterungssystem nach Anspruch 10, dadurch gekennzeichnet, daß der Mechanismus die unter einem der Ansprüche 2 bis 9 spezifizierten Besonderheiten aufweist.

**Claims**

1. Mechanism for pulling, with respect to a support (1, 6), a movable retaining element (12), such as a rod, a beam or a cable, between two extreme positions, this mechanism comprising elastic driving means (18) disposed between said element (12) and said support (6) and retaining means (15) insuring a connection able to be broken between said element and said support, so that, in a first of said extreme positions of said element (12), said elastic driving means (18) are tightened, but prevented from releasing owing to the action of said retaining means (15) and that, in the second of said extreme positions of said element (12), said elastic driving means (18) are at least partially released as a result of breaking of said connection secured by said retaining means (15), characterized in that:

said elastic driving means consist of a plurality of flexible elastic blades (28, 29) identically disposed and evenly distributed about said element (12), the ends (30, 32) of each flexible elastic blade (28) being respectively connected to said element (12) and to said support (1, 6) and being close to each other in each first position, so that said elastic blade then forms a loop (45), and apart from each other in said second position, from a distance corresponding to the length of said blades, at least one of said ends (30, 32) of each flexible blade (28) being articulated on said element (12) or on said support (1, 6) about an axis (38) orthogonal to the pulling direction (25); and

damping means (50, 51) are provided between at least, on the one hand, said support or said element and, on the other hand, the corresponding ends of said blades.

2. Mechanism according to claim 1, characterized in that it comprises two frames (37, 42) respectively connected to said support and to said element and on which are fixed in common the corresponding ends of said flexible elastic blades (28, 29), and in that the connection between at least one of said frames (37) and the corresponding ends (30, 31) of said elastic blades (28, 29) is made by articulations (36), the axes (38) of which are orthogonal to said direction (25) of displacement, and in that said damping means are disposed between said support and that frame to which are connected the ends of said elastic blades directed toward said support.

3. Mechanism according to one of claims 1 or 2, characterized in that said damping means consist of a set of two coaxial rings (50 and 51) able to slide on each other with friction, one (51) of which is fixed on said support and on the other (50) of which is fixed said frame (42) of said elastic blades (28, 29), the common axis of said rings being parallel to the direction of said displacement.

4. Mechanism according to claim 3, characterized in that the contacting portions of said rings (50, 51) have a variation of diameter able to impart a wedging effect as said element moves toward said second position.

5. Mechanism according to one of claims 3 or 4, characterized in that said ring (50) fixed on said frame (42) and able to slide on the other ring (51) is elastically expandable.

6. Mechanism according to one of claims 3 to 5, characterized in that hooking locking means are provided on said damping rings (50, 51) and are able to cooperate with each other when said rings are in their relative position corresponding to said second position of said movable element with respect to said support.

7. Mechanism according to claim 6, characterized in that said hooking locking means consist of end rims (56, 65) of said rings (51, 50) fitting into each other in their relative position corresponding to said second position.

8. Mechanism according to any one of claims 1 to 7, characterized in that said elastic blades (28, 29) are formed by at least one thin flexible elastic strip (70) having a concave section.

9. Mechanism according to one of claims 1 to 8, characterized in that said elastic blades (28, 29) are formed by two thin flexible elastic strips (70) associated so that their concavities are facing each other.

10. System for retaining, in folded position, a set of panels (3 to 6) articulated one to the other, and on a structure (1), and able to take either said folded position in which said panels form a stack, or an expanded position in which said panels are at least substantially aligned one at the end of the other, said system comprising:

at least a retaining element (12) passing through said panels (3 to 6) in folded position of said set and fixed, on the one side, on said structure (1) and, on the other side, on the external panel (6) of said set;

means (15) for voluntarily breaking either said retaining element (12) or its fixation on said structure (1), when said set of panels is intended to pass from its folded position to its expanded position; and

a mechanism having elastic driving means (18) for pulling, through said external panel, the corresponding portion of said retaining element (12) after action of said breaking means (15),

characterized in that said mechanism (18) comprises a plurality of flexible elastic blades (28) identically disposed and evenly distributed about said element (12), the ends (30, 32) of each flexible elastic blade being respectively connected to said retaining element (12) and to said external panel (6) and being close to each other in said folded position, so that each elastic blade then forms a loop (45), and being, in the expanded position, apart from each other, from a distance corresponding to the length of said blades, at least one of said ends (30, 32) of each flexible blade (28) being articulated on said element (12) or said support (1, 6) about an axis (38) orthogonal to the pulling direction (25) and in that damping means (50, 51) are provided between at least, on the one hand, said structure (1) and, on the other hand, the corresponding ends of said blades.

11. Retaining system according to claim 10, characterized in that said mechanism comprises the characteristics according to any one of claims 2 to 9.

FIG.1

FIG.2

FIG.3

EP 0 239 454 B1

FIG.4

FIG.5

FIG.6

FIG.7

4